# EUROPÄISCHE PATENTSCHRIFT

(11) **EP 1 840 015 B1**
(45) Veröffentlichungstag und Bekanntmachung des Hinweises auf die Patenterteilung: **02.01.2013**
(21) Anmeldenummer: 07003848.4
(22) Anmeldetag: 26.02.2007
(51) Int. Cl.: B62D 35/00, B62D 37/02

(54) **Luftleitvorrichtung für ein Fahrzeug**
Air conduction device for a vehicle
Dispositif de commande d'air pour véhicule

(30) Priorität: 28.03.2006 DE 102006014264
(43) Veröffentlichungstag der Anmeldung: 03.10.2007
(73) Patentinhaber: Dr. Ing. h.c. F. Porsche AG, 70435 Stuttgart (DE)
(72) Erfinder: Fröschle, Mathias, 73760 Ostfildern (DE); Schwarz, Markus, 71696 Möglingen (DE); Paul, Joachim, 70563 Stuttgart (DE)

(56) Entgegenhaltungen:
- DE-A1-102004 030 571
- JP-A- 2 117 476

## Beschreibung

Die Erfindung betrifft eine Luftleitvorrichtung für ein Fahrzeug nach dem Oberbegriff des Patentanspruchs 1. Eine solche Luftleiteinrichtung ist aus der DE 10 2004 030 571 A1 bekannt. Die Luftleiteinrichtung wird über eine Verstelleinrichtung zwischen einer eingefahrenen Ruhestellung und einer ausgefahrenen Betriebsstellung bewegt. An einem Hauptelement der Luftleiteinrichtung sind seitlich außen schwenkbare Zusatzelemente angelenkt.

Aus der DE 30 19 150 A1 ist eine Luftleitvorrichtung für ein Fahrzeug bekannt, die in einem oben liegenden Heckbereich des Fahrzeugs angeordnet ist und ein Luftleitelement umfasst, welches von einer Ruhestellung, in der es oberflächenbündig in den Formverlauf des Heckbereichs integriert ist, in eine ausgefahrene Betriebsstellung verlagerbar ist. Das Luftleitelement ist als Tragflügel ausgebildet, der mittels einer Betätigungseinrichtung von der Ruhestellung in die Betriebsstellung und umgekehrt verlagerbar bzw. überführbar ist.

Die DE 43 05 090 A1 offenbart ebenfalls eine Luftleitvorrichtung für ein Fahrzeug, die in einem Heckbereich des Fahrzeugs angeordnet ist und ein Luftleitelement umfasst, welches von einer Ruhestellung in eine ausgefahrene Betriebsstellung verlagerbar ist. Das Luftleitelement wird durch einen Heckspoiler gebildet, der in einer versenkten Aufnahme der Fahrzeugkarosserie angeordnet und mittels einer Betätigungseinrichtung von der Ruhestellung in die Betriebsstellung und umgekehrt verlagerbar ist.

Mit den aus der DE 30 19 150 A1 und aus der DE 43 05 090 A1 bekannten Luftleitvorrichtungen kann der Hinterachsabtriebsbeiwert (cₐₕ-Wert) des Kraftfahrzeugs bei gleichbleibendem oder auch verbessertem Luftwiederstandsbeiwert (c_{w-}Wert) erhöht werden, wobei diese bekannten Luftleitelemente in der Ruhestellung und in der Betriebsstellung jeweils dieselbe Quererstreckung aufweisen.

Die nachveröffentlichte DE 10 2005 030 203 A1 offenbart eine Luftleitvorrichtung für ein Fahrzeug, die ein mittleres Hauptluftleitelement sowie zwei seitliche Zusatzluftleitelemente umfasst, wobei mit Hilfe der Zusatzluftleitelemente die Quererstreckung der Luftleitvorrichtung in der Betriebsstellung vergrößert werden und insbesondere der Hinterachsabtriebsbeiwert weiter erhöht werden kann. Nach der DE 10 2005 03 203 A1 erfolgt die Verstellbewegung der seitlichen Zusatzluftleitelemente gegenüber dem mittleren Hauptluftleitelement dann, wenn das Hauptluftleitelement von der Ruhestellung in die Betriebsstellung verlagert wurde. Die Verstellung der Zusatzluftleitelemente gegenüber dem Hauptluftleitelement erfolgt demnach zeitlich nach bzw. entkoppelt von der Verlagerung des Hauptluftleitelements.

Hiervon ausgehend liegt der vorliegenden Erfindung das Problem zu Grunde eine neuartige Luftleitvorrichtung für ein Fahrzeug zu schaffen. Dieses Problem wird mit einer Luftleitvorrichtung gelöst, die die Merkmale des Patentanspruchs 1 aufweist Die seitlichen Zusatzluftleitelemente sind gegenüber dem oder jedem mittleren Hauptluftleitelement um jeweils einen hauptluftleitelementfesten Drehpunkt drehbar, um dieselben von einer ebenfalls eingefahrenen Ruhestellung in eine ebenfalls ausgefahrene Betriebsstellung zu überführen.

Nach einer vorteilhaften Weiterbildung der Erfindung ist bei der erfindungsgemäßen Luftleitvorrichtung die Verstellung der seitlichen Zusatzluftleitelemente an die Vertagerung des oder jedes mittleren Hauptiuftleitelements bei der Überführung desselben bzw. derselben von der Ruhestellung in die Betriebsstellung und umgekehrt derart gekoppelt, dass die seitlichen Zusatzluftleitelemente zeitgleich bzw. simultan mit der Verlagerung des oder jedes mittleren Hauptluftleitelements gegenüber dem oder jedem mittleren Hauptluftleitelement von der Ruhestellung in die Betriebsstellung bzw. von der Betriebsstellung in die Ruhestellung überführt werden können. Hierbei werden die seitlichen Zusatzluftleitelemente gegenüber dem oder jedem mittleren Hauptluftleitelement um jeweils einen hauptluftleitelementfesten Drehpunkt verdreht. Innerhalb kürzester Zeit sowie auf einfache Art und Weise kann hierdurch die Quererstreckung der erfindungsgemäßen Luftleitvorrichtung angepasst werden.

Vorzugsweise ist jedem seitlichen Zusatzluftleitelement zur Drehung desselben gegenüber dem mittleren Hauptluftleitelement eine Betätigungseinrichtung zugeordnet, wobei an der Betätigungseinrichtung eine Kopplungseinrichtung angreift, welche die Drehung des oder jedes seitlichen Zusatzluftleitelements gegenüber dem mittleren Hauptluftleitelement an die Verlagerung des mittleren Hauptluftleitelements koppelt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine erfindungsgemäße Luftleitvorrichtung in Ruhestellung in Draufsicht;
- Fig. 2: die Luftleitvorrichtung der Fig. 1 in Ruhestellung in perspektivischer Ansicht von schräg hinten;
- Fig. 3: die Luftleitvorrichtung der Fig. 1 und 2 in Betriebsstellung in Draufsicht;
- Fig. 4: die Luftleitvorrichtung der Fig. 1 bis 2 in Betriebsstellung in perspektivischer Ansicht von schräg hinten;
- Fig. 5: die Luftleitvorrichtung der Fig. 1 bis 4 in Ruhestellung in Seitenansicht;
- Fig. 6: die Luftleitvorrichtung der Fig. 1 bis 4 in Betriebsstellung in Seitenansicht;
- Fig. 7: eine Detailansicht der Luftleitvorrichtung der Fig. 1 bis 6 in Ruhestellung im Bereich eines Zusatzluftleitelements; und
- Fig. 8: die Detailansicht der Luftleitvorrichtung der Fig. 8 in Betriebsstellung.

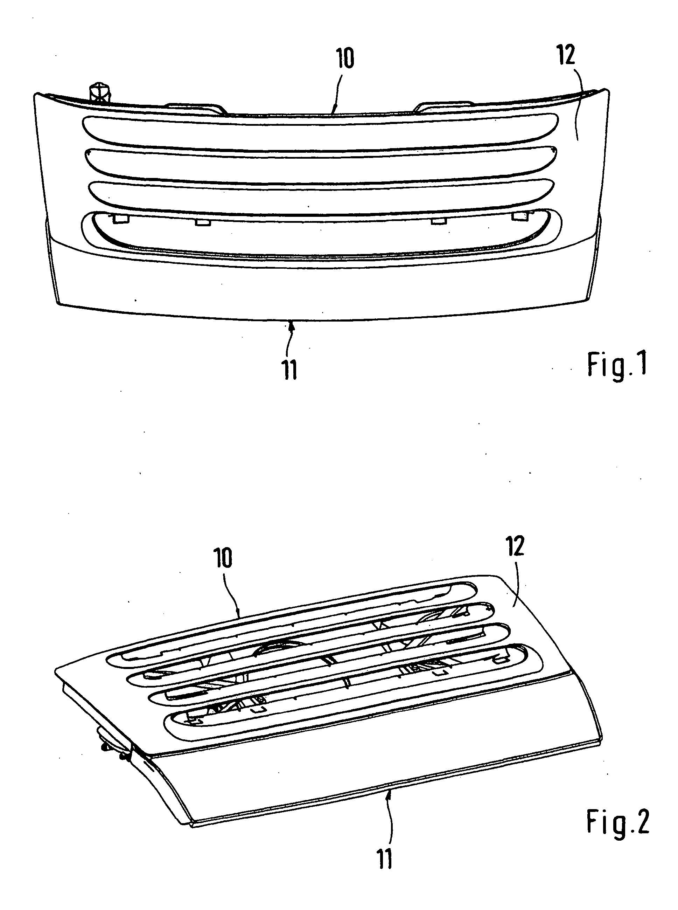

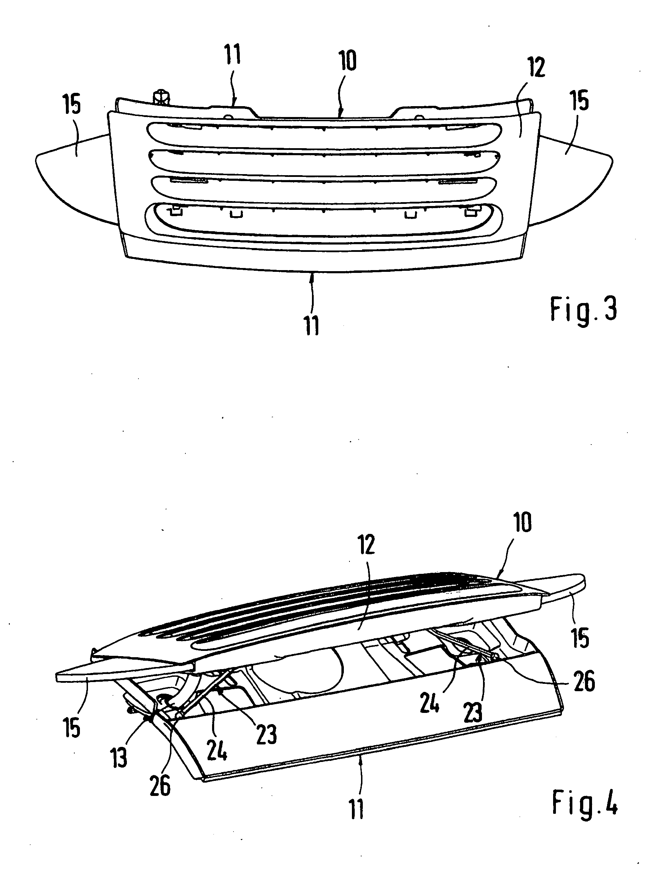

Fig. 1 bis 6 zeigen eine erfindungsgemäße Luftleitvorrichtung 10 eines Fahrzeugs zusammen mit einem Karosserieabschnitt 11 eines Heckbereichs des Fahrzeugs. Fig. 1, 2 und 5 zeigen die Luftleitvorrichtung 10 jeweils in einer Ruhestellung, in welcher dieselbe oberflächenbündig in den Formverlauf des Heckbereichs bzw. in den Karosserieabschnitt 11 des Heckbereichs integriert ist. Fig. 3, 4 und 6 hingegen zeigen die Luftleitvorrichtung 10 in einer Betriebsstellung, in welcher dieselbe zur Erhöhung des Hinterachsabtriebsbeiwerts gegenüber dem Heckbereich bzw. dem Karosserieabschnitt 11 des Heckbereichs ausgefahren ist.

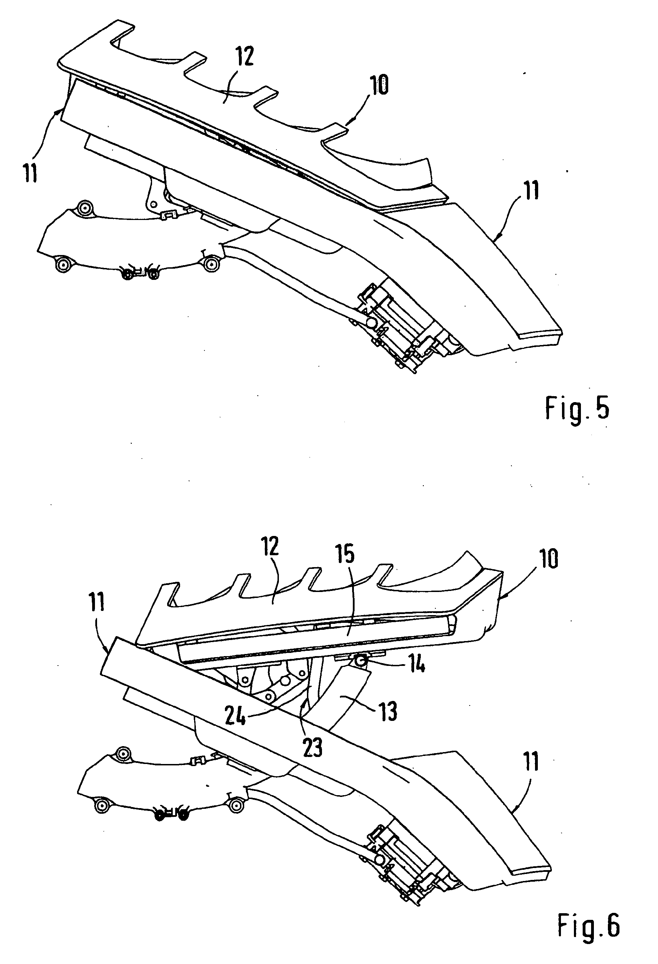

Die erfindungsgemäße Luftleitvorrichtung 10 verfügt über ein mittleres Hauptluftleitelement 12, welches mit Hilfe einer Betätigungseinrichtung 13 (siehe Fig. 4 und 6) von der eingefahrenen Ruhestellung in die ausgefahrene Betriebsstellung nach oben verlagert werden kann. Zu beiden Seiten des Hauptluftleitelements 12 greift dabei vorzugsweise jeweils eine Betätigungseinrichtung 13 über ein Gelenk 14 an dem Hauptluftleitelement 12 an.

Neben dem Hauptluftleitelement 12, welches in der eingefahrenen Ruhestellung sowie der ausgefahrenen Betriebsstellung dieselbe Quererstreckung aufweist, verfügt die erfindungsgemäße Luftleitvorrichtung 10 über zwei seitliche Zusatzluftleitelemente 15, die in einer Betriebsstellung (siehe Fig. 1, 2 und 5) eingefahren und nicht sichtbar sowie in einer Betriebsstellung (siehe Fig. 3, 4 und 6) unter Vergrößerung der Quererstreckung der erfindungsgemäßen Luftleitvorrichtung 10 ausgefahren und sichtbar sind.

In der eingefahrenen Ruhestellung finden die Zusatzluftleitelemente 15 vollständig im Hauptluftleitelement 12 Aufnahme bzw. sind vom Hauptluftleitelement 12 vollständig abgedeckt. Das mittlere Hauptluftleitelement 12 wird bei der Überführung bzw. Verlagerung von der Ruhestellung in die Betriebsstellung bzw. von der Betriebsstellung in die Ruhestellung verschwenkt und dabei angehoben bzw. abgesenkt, wobei die beiden seitlichen Zusatzluftleitelemente 15 diese Bewegung des mittleren Hauptluftleitelements 12 mit ausführen.

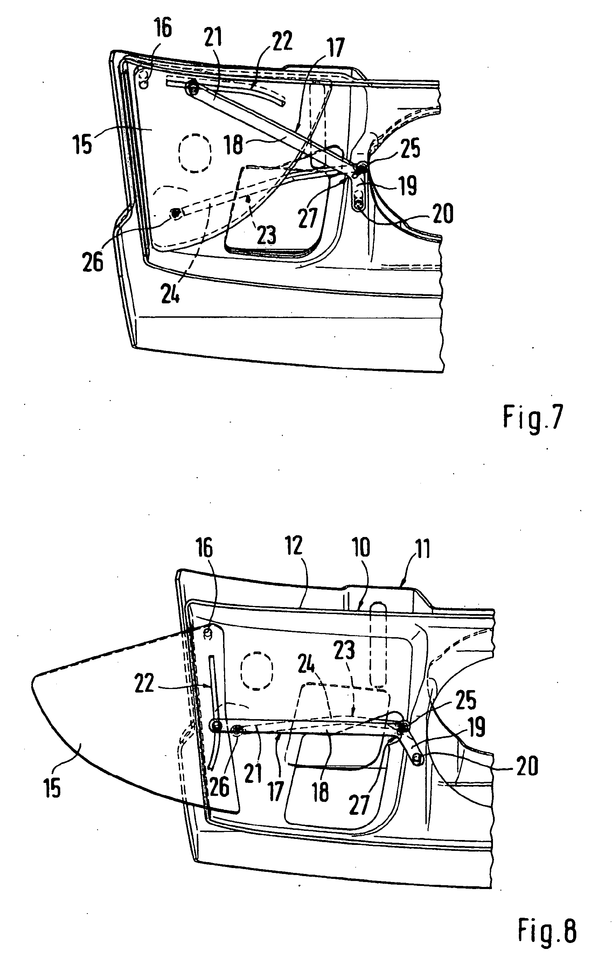

Im bevorzugten, gezeigten Ausführungsbeispiel der Erfindung sind die beiden seitlichen Zusatzluftleitelemente 15 zeitgleich bzw. simultan mit der schwenkartigen Verlagerung des mittleren Hauptluftleitelements 12 gegenüber dem mittleren Hauptluftleitelement 12 um jeweils einen hauptluftleitelementfesten Drehpunkt 16 (siehe Fig. 7 und 8) drehbar, um dieselben von der eingefahrenen Ruhestellung (siehe Fig. 7) in die ausgefahrene Betriebsstellung (siehe Fig. 8) bzw. von der Betriebsstellung in die Ruhestellung zu überführen.

Die Überführung der seitlichen Zusatzluftleitelemente 15 von der Ruhestellung in die Betriebsstellung bzw. umgekehrt ist dabei an die Verlagerung des Hauptluftleitelements 12 von der Ruhestellung in die Betriebsstellung bzw. umgekehrt gekoppelt, so dass demnach die Zusatzluftleitelemente 15 simultan bzw. gleichzeitig zu dem Hauptluftleitelement 12 von der Ruhestellung in die Betriebstellung bzw. von der Betriebstellung in die Ruhestellung überführbar sind.

Zur Drehung der seitlichen Zusatzluftleitelemente 15 gegenüber dem mittleren Hauptluftleitelement 12 um die hauptluftleitelementfesten Drehpunkte 16 ist jedem Zusatzluftleitelement 15 eine Betätigungseinrichtung 17 zugeordnet, die im gezeigten Ausführungsbeispiel als abgewinkeltes Betätigungselement 18 ausgebildet ist. Das Betätigungselement 18 wird nachfolgend als Betätigungstange bezeichnet. Das Betätigungselement 18 kann auch als Betätigungslenker bezeichnet werden.

Jede der Betätigungsstangen 18 ist über ein erstes Ende 19 gelenkig mit dem Hauptluftleitelement 12 verbunden, wobei das erste Ende 19 der abgewinkelten Betätigungsstange 18 über ein Gelenk 20 am Hauptluftleitelement 12 angreift. Mit einem zweiten Ende 21 greift jede Betätigungsstange 18 an einem seitlichen Zusatzluftleitelement 15 an, nämlich an einer Kulissenführung 22 desselben.

Wie einem Vergleich der Fig. 7 und 8 entnommen werden kann, sind die seitlichen Zusatzluftleitelemente 15 gegenüber dem mittleren Hauptluftleitelement 12 um einen Winkel von in etwa 90° um den jeweiligen hauptluftleitelementfesten Drehpunkt 16 drehbar.

Zur Kopplung der Überführung der seitlichen Zusatzluftleitelemente 15 zwischen der Ruhestellung und der Betriebsstellung gegenüber dem mittleren Hauptluftleitelement 12 an die Verlagerung des Hauptluftleitelements 12 greift im gezeigten Ausführungsbeispiel an den abgewinkelten Betätigungsstangen 18 eine Kopplungseinrichtung 23 an, welche die Drehung des entsprechenden Zusatzluftleitelements 15 gegenüber dem Hauptluftleitelement 12 an die Verlagerung des Hauptluftleitelements 12 mechanisch koppelt. Die an einer Betätigungsstange 18 angreifende Kopplungseinrichtung 23 wird dabei von einem Kopplungselement 24 gebildet. Das Kopplungselement 24 wird nachfolgend als Kopplungsstange bezeichnet. Das Kopplungselement 24 kann auch als Kopplungslenker bezeichnet werden.

Jede Kopplungsstange 24 ist einerseits mit der Betätigungsstange 18 der Betätigungseinrichtung 17 des jeweiligen Zusatzluftleitelements 15 und andererseits mit dem Karosserieabschnitt 11 über Gelenke 25 und 26, die vorzugsweise als Kugelgelenke ausgeführt sind, gelenkig verbunden sind.

Die in Fig. 7 und 8 gezeigte Kopplungsstange 24 der Kopplungseinrichtung 23 greift dabei über das Gelenk 25 an einem Abschnitt 27 der Betätigungsstange 18 der Betätigungseinrichtung 17 an, in welchem die Betätigungsstange 18 abgewinkelt ist. Durch die Kopplungseinrichtung 23 wird demnach eine mechanische Kopplung der Drehbewegung der Zusatzluftleitelemente 15 gegenüber dem Hauptluftleitelement 12 an die Bewegung des Hauptluftleitelements 12 bei der Verlagerung von der eingefahrenen Ruhestellung in die ausgefahrene Betriebsstellung bzw. von der ausgefahrenen Betriebsstellung in die eingefahrene Ruhestellung bereitgestellt.

Durch die mechanische Kopplung der Drehbewegung der Zusatzluftleitelemente 15 relativ zum Hauptluftleitelement 12 bei der Verlagerung des Hauptluftleitelements 12 zwischen der Ruhestellung und der Betriebsstellung ist lediglich ein einziger Antrieb für die erfindungsgemäße Luftleitvorrichtung 10 erforderlich, um dieselbe von der Ruhestellung in Betriebstellung bzw. von der Betriebsstellung in die Ruhestellung zu überführen.

Es ist nach einem nicht von der Erfindung gemäß Patentanspruch 1 erfassten Ausführungsbeispiel auch möglich, dass zum Verdrehen der Zusatzluftleitelemente denselben separate Antriebe zugeordnet sind, wobei die Kopplung der Verstellung der Zusatzluftleitelemente an die Verstellbewegung des Hauptluftleitelements dann nicht mechanisch sondern vielmehr steuerungsseitig dadurch erfolgt, dass die Antriebe der Zusatzluftleitelemente mit dem Antrieb des Hauptluftleitelements steuerungsseitig gekoppelt sind. In diesem Fall sind die Zusatzluftleitelemente dann auch entkoppelt vom Hauptluftleitelement bewegbar, um die Verstellbewegungen von Hauptluftleitelement und Zusatzluftleitelementen z.B. nacheinander auszuführen. Ebenso können in diesem Fall z.B. geschwindigkeitsabhängige Verstellungen der Zusatzluftleitelemente realisiert werden, die unabhängig von einer geschwindigkeitsabhängigen Verstellung des Hauptluftleitelements sind.

Dadurch, dass die Betätigungsstange 18 jeder Betätigungseinrichtung 17 an der Kulissenführung 22 des entsprechenden Zusatzluftleitelements 15 angreift und mit dem entsprechenden Ende 21 in der Kulissenführung 22 geführt ist, ist es möglich, die maximale Ausfahrstellung der seitlichen Zusatzluftleitelemente 15 bereits bei einer geringen Ausfahrhöhe des mittleren Hauptluftleitelements 12 bereitzustellen. Beim weiteren Ausfahren bzw. Aufstellen des Hauptluftleitelements 12 bleiben dann die seitlichen Zusatzluftleitelemente 15 stehen, die Betätigungsstange 18 läuft dann in der Kulissenführung 22 leer. Auf diese Art und Weise können z.B. fahrgeschwindigkeitsgesteuert unterschiedliche Ausfahrhöhen des mittleren Hauptluftleitelements 12 angefahren werden, ohne dass die mechanische Koppelkinematik zu den seitlichen Zusatzluftleitelementen 15 angepasst werden muss.

Die Ausfahrbewegung der seitlichen Zusatzluftleitelemente 15 gegenüber dem mittleren Hauptluftleitelement 12 kann durch nicht-dargestellte Anschläge begrenzt werden.

Zur besseren Abstützung der seitlichen Zusatzluftleitelemente 15 am mittleren Hauptluftleitelement 12 können nicht-dargestellte Fixierungen oder nicht-dargestellte Kulissenführungen vorgesehen sein, um die seitlichen Zusatzluftleitelemente 15 während der Drehbewegung um den hauptluftleitelementfesten Drehpunkt 16 bzw. während der Ausfahrbewegung aus dem Hauptluftleitelement 12 an einem weiteren Punkt im mittleren Hauptluftleitelement 12 abzustützen.

## Patentansprüche

1. Luftleitvorrichtung (10) für ein Fahrzeug, insbesondere für ein Personenkraftfahrzeug, die in einem Heckbereich des Fahrzeugs angeordnet ist und mindestens ein mittleres Hauptluftleitelement (12) umfasst, welches von einer eingefahrenen Ruhestellung in eine ausgefahrene Betriebsstellung verlagerbar ist, wobei seitliche Zusatzluftfeitelemente (15) zusammen mit dem oder jedem mittleren Hauptluftleitelement (12) verlagerbar und gegenüber dem oder jedem mittleren Hauptluftleitelement (12) um jeweils einen hauptluftleitelementfesten Drehpunkt (16) drehbar sind, um dieselben von einer ebenfalls eingefahrenen Ruhestellung in eine ebenfalls ausgefahrene Betriebsstellung zu überführen, und wobei jedem seitlichen Zusatzluftleitelement (15) zur Drehung desselben gegenüber dem mittleren Hauptluftleitelement (12) eine Betätigungseinrichtung (17) zugeordnet ist, **dadurch gekennzeichnet, dass** die Betätigungseinrichtung (17) ein Betätigungselement (18) aufweist, das über ein erstes Ende (19) mit dem mittleren Hauptluftleitelement (12) gelenkig verbunden ist und das über ein zweites Ende (21) an einer Kulissenführung (22) des jeweiligen seitlichen Zusatzluftleitelements (15) angreift, und dass die Kulissenführung (22) derart ausgestaltet ist, dass eine maximale Ausfahrstellung der seitlichen Zusatzluftleitelemente (15) bereits bei einer geringen Ausfahrhöhe des mittleren Hauptluftleitelements (12) bereitgestellt ist.

2. Luftleitvorrichtung nach Anspruch 1, **dadurch gekennzeichnet, dass** das Betätigungselement (18) abgewinkelt ausgebildet ist.

3. Luftleitvorrichtung nach Anspruch 1 oder 2, **dadurch gekennzeichnet, dass** die seitlichen Zusatzluftleitelemente (15) zeitgleich bzw. simultan mit der Verlagerung des oder jedes mittleren Hauptluftleitelements (12) von der ebenfalls eingefahrenen Ruhestellung in die ebenfalls ausgefahrene Betriebsstellung überführbar sind.

4. Luftleitvorrichtung nach Anspruch 3, **dadurch gekennzeichnet, dass** hierzu an der Betätigungseinrichtung (17) eine Kopplungseinrichtung (23) angreift, welche die Drehung des oder jedes seitlichen Zusatzluftleitelements (15) gegenüber dem oder jedem mittleren Hauptluftleitelement (12) an die Verlagerung des Hauptluftleitelements (12) mechanisch koppelt.

5. Luftleitvorrichtung nach Anspruch 4, **dadurch gekennzeichnet, dass** die Kopplungseinrichtung (23) ein Kopplungselement (24) aufweist, das einerseits mit dem Betätigungselement (18) der Betätigungseinrichtung (17) und andererseits mit einem Karosseriesabschnitt (11) gelenkig verbunden ist.

6. Luftleitvorrichtung nach einem der vorhergehenden Ansprüche, **dadurch gekennzeichnet, dass** die seitlichen Zusatzluftleitelemente (15) gegenüber dem mittleren Hauptluftleitelement (12) zur Überführung derselben zwischen der Ruhestellung und der Betriebsstellung um einen Winkel von in etwa 90° drehbar sind.

7. Luftleitvorrichtung nach einem der vorhergehenden Ansprüche, **dadurch gekennzeichnet, dass** die seitlichen Zusatzluftleitelemente (15) in Ruhestellung des mittleren Hauptluftleitelements (12) nicht sichtbar sind.

## Claims

1. Air conduction device (10) for a vehicle, in particular for a passenger motor vehicle, the air conduction device being arranged in a rear region of the vehicle and comprising at least one central main air conduction element (12) which is displaceable from a retracted inoperative position into an extended operative position, wherein lateral additional air conduction elements (15) are displaceable together with the or each central main air conduction element (12) and are rotatable in relation to the or each central main air conduction element (12) about a pivot (16) mounted in each case on the main air conduction element, in order for said additional air conduction elements to be transferred from a likewise retracted inoperative position into a likewise extended operative position, and wherein each lateral additional air conduction element (15) is assigned an actuating device (17) for the rotation of same in relation to the central main air conduction element (12), **characterized in that** the actuating device (17) has an actuating element (18) which is connected in an articulated manner via a first end (19) to the central main air conduction element (12) and which acts via a second end (21) on a slotted guide mechanism (22) of the particular lateral additional air conduction element (15), and **in that** the slotted guide mechanism (22) is configured in such a manner that a maximum extension position of the lateral additional air conduction elements (15) is already provided at a low extension height of the central main air conduction element (12).

2. Air conduction device according to Claim 1, **characterized in that** the actuating element (18) is of angled design.

3. Air conduction device according to Claim 1 or 2, **characterized in that** the lateral additional air conduction elements (15) are transferrable isochronously or simultaneously with the displacement of the or each central main conduction element (12) from the likewise retracted inoperative position into the likewise extended operative position.

4. Air conduction device according to Claim 3, **characterized in that**, for this purpose, a coupling device (23) acts on the actuating device (17), said coupling device mechanically coupling the rotation of the or each lateral additional air conduction element (15) in relation to the or each central main air conduction element (12) to the displacement of the main air conduction element (12).

5. Air conduction device according to Claim 4, **characterized in that** the coupling device (23) has a coupling element (24) which is connected in an articulated manner at one end to the actuating element (18) of the actuating device (17) and at the other end to a body section (11).

6. Air conduction device according to one of the preceding claims, **characterized in that** the lateral additional air conduction elements (15) are rotatable through an angle of approximately 90° in relation to the central main air conduction element (12) in order to transfer same between the inoperative position and the operative position.

7. Air conduction device according to one of the preceding claims, **characterized in that** the lateral additional air conduction elements (15) are not visible in the inoperative position of the central main air conduction element (12).

## Revendications

1. Dispositif de guidage d'air (10) pour un véhicule, en particulier pour un véhicule automobile léger, qui est disposé dans une région arrière du véhicule et qui comprend au moins un élément de guidage d'air principal central (12) qui peut être déplacé d'une position de repos rentrée dans une position de fonction sortie, des éléments de guidage d'air supplémentaires latéraux (15) pouvant être déplacés conjointement avec le ou chaque élément de guidage d'air principal central (12) et pouvant être tournés par rapport au ou à chaque élément de guidage d'air principal central (12) autour d'un centre de rotation (16) respectif fixé à l'élément de guidage d'air principal, afin de transférer ceux-ci depuis une position de repos également rentrée dans une position de fonctionnement également sortie, et un dispositif d'actionnement (17) étant associé à chaque élément de guidage d'air supplémentaire latéral (15) pour le faire tourner par rapport à l'élément de guidage d'air principal central (12), **caractérisé en ce que** le dispositif d'actionnement (17) présente un élément d'actionnement (18) qui est relié de manière articulée par le biais d'une première extrémité (19) à l'élément de guidage d'air principal central (12) et qui vient en prise par le biais d'une deuxième extrémité (21) avec un guide à coulisse (22) de l'élément de guidage d'air supplémentaire latéral respectif (15), et **en ce que** le guide à coulisse (22) est configuré de telle sorte qu'une position sortie au maximum des éléments de guidage d'air supplémentaires latéraux (15) soit fournie déjà pour une faible hauteur de sortie de l'élément de guidage d'air principal central (12).

2. Dispositif de guidage d'air selon la revendication 1, **caractérisé en ce que** l'élément d'actionnement (18) est réalisé sous forme coudée.

3. Dispositif de guidage d'air selon la revendication 1 ou 2, **caractérisé en ce que** les éléments de guidage d'air supplémentaires latéraux (15) peuvent être transférés en même temps ou simultanément avec le déplacement du ou de chaque élément de guidage d'air principal central (12) depuis la position de repos également rentrée dans la position de fonctionnement également sortie.

4. Dispositif de guidage d'air selon la revendication 3, **caractérisé en ce qu'**en outre, un dispositif d'accouplement (23) vient en prise avec le dispositif d'actionnement (17), lequel accouple mécaniquement la rotation du ou de chaque élément de guidage d'air supplémentaire latéral (15) par rapport au ou à chaque élément de guidage d'air principal central (12) au déplacement de l'élément de guidage d'air principal (12).

5. Dispositif de guidage d'air selon la revendication 4, **caractérisé en ce que** le dispositif d'accouplement (23) présente un élément d'accouplement (24) qui est connecté de manière articulée d'une part à l'élément d'actionnement (18) du dispositif d'actionnement (17) et d'autre part à une partie de la carrosserie (11).

6. Dispositif de guidage d'air selon l'une quelconque des revendications précédentes, **caractérisé en ce que** les éléments de guidage d'air supplémentaires latéraux (15) peuvent tourner suivant un angle d'environ 90° par rapport à l'élément de guidage d'air principal central (12) pour transférer ce dernier entre la position de repos et la position de fonctionnement.

7. Dispositif de guidage d'air selon l'une quelconque des revendications précédentes, **caractérisé en ce que** les éléments de guidage d'air supplémentaires latéraux (15) ne sont pas visibles dans la position de repos de l'élément de guidage d'air principal central (12).
